(19) Europäisches Patentamt
European Patent Office
Office européen des brevets

(11) **EP 0 843 706 B1**

(12) **EUROPÄISCHE PATENTSCHRIFT**

(45) Veröffentlichungstag und Bekanntmachung des Hinweises auf die Patenterteilung:
**03.08.2005 Patentblatt 2005/31**

(51) Int Cl.⁷: **C09D 133/06**, B05D 7/26, C08G 18/78

(21) Anmeldenummer: **97925944.7**

(22) Anmeldetag: **26.05.1997**

(86) Internationale Anmeldenummer:
**PCT/EP1997/002677**

(87) Internationale Veröffentlichungsnummer:
**WO 1997/047700 (18.12.1997 Gazette 1997/54)**

(54) **MEHRSCHICHTIGE LACKIERUNG, VERFAHREN ZU DEREN HERSTELLUNG UND HIERFÜR GEEIGNETER NICHT-WÄSSRIGER DECKLACK**

MULTI-LAYERED PAINT SPRAYING, PROCESS FOR ACHIEVING SAME, AND A SUITABLE, NON-AQUEOUS FINISHING COAT

LAQUAGE MULTICOUCHE, SON PROCEDE DE REALISATION ET LAQUE DE FINITION NON AQUEUSE APPROPRIEE A CET EFFET

(84) Benannte Vertragsstaaten:
**AT BE CH DE DK ES FI FR GB GR IT LI NL PT SE**

(30) Priorität: **07.06.1996 DE 19622878**

(43) Veröffentlichungstag der Anmeldung:
**27.05.1998 Patentblatt 1998/22**

(60) Teilanmeldung:
**02016458.8 / 1 254 934**

(73) Patentinhaber: **BASF Coatings AG**
**48165 Münster (DE)**

(72) Erfinder:
• **RÖCKRATH, Ulrike**
  **D-48308 Senden (DE)**
• **BAUMGART, Hubert**
  **D-48163 Münster-Amelsbüren (DE)**

(74) Vertreter: **Fitzner, Uwe, Dr. et al**
**Dres. Fitzner & Münch**
**Rechts- und Patentanwälte**
**Hauser Ring 10**
**40878 Ratingen (DE)**

(56) Entgegenhaltungen:
**EP-A- 0 604 922          WO-A-94/22969**
**WO-A-95/23653          WO-A-96/34905**

**Beschreibung**

Die vorliegende Erfindung betrifft eine mehrschichtige Lackierung sowie ein Verfahren zu deren Herstellung. Die Erfindung betrifft ferner für die mehrschichtige Lackierung und für das Verfahren zu deren Herstellung geeignete nicht-wäßrige Lacke.

Aus dem Verstand der Technik ist ein Verfahren zur Herstellung einer zweischichtigen Lackierung, bei dem

(1) ein pigmentierter Basislack auf die Substratoberfläche aufgebracht wird
(2) aus dem in Stufe (1) aufgebrachten Basislack ein Polymerfilm gebildet wird
(3) auf der so erhaltenen Basislackschicht ein nicht-wäßriger transparenter Decklack aufgebracht wird und anschließend
(4) Basislackschicht und Decklackschicht zusammen eingebrannt werden.

Die Erfindung betrifft auch für dieses Verfahren geeignete nicht-wäßrige Lacke.

Das oben beschriebene basecoat/clearcoat-Verfahren wird vor allem zur Herstellung von mehrschichtigen Lackierungen, insbesondere Metalleffektlackierungen auf Automobilkarosserien eingesetzt (vgl. z.B. US-A-3,639,147 und EP-A-38 127).

Mit dem basecoat/clearcoat-Verfahren sind Lackierungen herstellbar, die sich im Vergleich zu einschichtigen Decklackierungen durch eine verbesserte Effektgebung und durch die Möglichkeit, Lackierungen mit leuchtenden und reineren Farbtönen herzustellen, auszeichnen.

Der in Stufe (1) vorlackierte Basislack bestimmt, je nach Art, Menge und räumlicher Orientierung der eingesetzten Pigmente, den Farbton und gegebenenfalls den Effekt (z.B. Metalleffekt oder Perlglanzeffekt) der Lackierung.

In Stufe (2) des Verfahrens werden dem in Stufe (1) aufgebrachten Basislackfilm in einer Abdunstphase wenigstens ein Teil der organischen Lösemittel bzw. wenigstens ein Teil des Wassers entzogen. Auf diese vorgetrocknete, aber nicht eingebrannte Basislackschicht wird in Stufe (3) ein nicht-wäßriger transparenter Decklack aufgebracht (Naß-in-Naß-Verfahren) und in Stufe (4) werden dann Basislackschicht und Decklackschicht zusammen eingebrannt.

Der in Stufe (3) aufgebrachte transparente Decklack verleiht der Zweischichtlackierung Glanz und Fülle und schützt die in Stufe (1) aufgebrachte pigmentierte Lackschicht vor chemischen und physikalischen Angriffen.

Mit dem in Rede stehenden Verfahren können nur dann qualitativ hochwertige Zweischichtlackierungen erhalten werden, wenn der in Stufe (3) aufgebrachte transparente Decklack die in den Stufen (1) und (2) aufgebrachte Basislackschicht nicht so stört, daß es zu einer Verschlechterung des optischen Effektes (z.B. Wolkenbildung) kommt. Andererseits muß der transparente Decklack so zusammengesetzt sein, daß er nach dem in Stufe (4) durchgeführten Einbrennprozeß auf der Basislackschicht gut haftet. Weitere wichtige Eigenschaften, die die nach dem Einbrennprozeß erhaltene transparente Decklackschicht aufweisen muß, sind hohe Transparenz, guter Glanz und gute mechanische Eigenschaften, wie Härte, Kratzfestigkeit und Elastizität. Nicht zuletzt muß die nach dem Einbrennprozeß erhaltene transparente Decklackschicht eine hohe Widerstandsfähigkeit gegen klimatische Einflüsse (z.B. Temperaturschwankungen, Feuchtigkeit in Form von Wasserdampf, Regen, Tau, Belastung durch Strahlung usw....) und gegen Angriffe durch Säuren oder andere Chemikalien, wie z.B. organische Lösemittel aufweisen.

Außerdem sollen die in Stufe (3) aufgebrachten transparenten Decklacke einen möglichst niedrigen Gehalt an organischen Lösemitteln und eine gute Lagerstabilität aufweisen.

In der JP-A-2-242867 wird ein basecoat/clearcoat-Verfahren beschrieben, bei dem in Stufe (3) nicht-wäßrige transparente Decklacke aufgebracht werden, die (A) ein hydroxylgruppenhaltiges Kunstharz, (B) ein Aminoplastharz und (C) ein blockiertes Polyisocyanat enthalten, wobei die Komponenten (B) und (C) so auszuwählen sind, daß die Temperatur, bei der eine chemische Reaktion zwischen (A) und (C) einsetzt, höchstens 20°C unter und höchstens 50°C über der Temperatur, bei der eine chemische Reaktion zwischen (A) und (B) einsetzt, liegen soll.

Als Blockierungsmittel zur Herstellung der Komponente (C) werden genannt: Flüchtige, niedermolekulare, aktive Wasserstoffatome aufweisende Verbindungen, wie Methanol, Ethanol, Propanol, Butanol, Hexanol, Cyclohexanol, Benzylalkohol, Ethylenglykolmonoethylether und andere aliphatische oder aromatische Monoalkohole, Dimethyloder Diethylaminoethanol und andere hydroxylgruppenhaltige tertiäre Amine, Acetonoxim, Methylethylketonoxim und andere Oxime, Acetylaceton, Acetessigsäureester, Malonsäureester und andere aktive Methylengruppen enthaltende Verbindungen, ε-Caprolactam und andere Lactame und Phenol. Als Blockierungsmittel werden vorzugsweise aliphatische Monoalkohole, Oxime und Caprolactame eingesetzt.

Die in der JP-A-2-242867 beschriebenen transparenten Decklacke liefern Lackierungen, die insbesondere hinsichtlich der Beständigkeit gegen organische Lösemittel und Säuren, Glanz, Transparenz und Resistenz gegenüber Vergilbung verbessert werden sollten.

Aus der WO 95/23653 sind Systeme bekannt, welche als Decklack ein hydroxylgruppenhaltiges Polyacrylatharz in Verbindung mit einem Vernetzungsmittel verwenden. Erfindungswesentlich für die WO 95/23653 ist dabei, daß die Vernetzerkomponente aus Polymerisaten von Polyisocyanaten bzw. Gemischen solcher Polymerisate besteht.

Aus der WO 96/34905 sind Zusammensetzungen enthaltend Tris(alkoxycarbonylamino)Triazin und hydroxylgruppenhaltige Bindemittel, sowie Aminoplastharze bekannt. Es sind jedoch keine Zusammensetzungen beschrieben, die zusätzlich noch blockierte isocyanate enthalten.

In der DE-B-26 39 491 werden nicht-wäßrige Lacke beschrieben, die ein hydroxylgruppenhaltiges Polyester- und/oder Alkydharz, mit einem Acetessigsäueralkylester blockiertes Hexamethylendiisocyanat und/oder mit einem Acetessigsäurealkylester blockiertes 2,2,4 Trimethylhexamethylendiisocyanat und ein Aminoplastharz enthalten. Diese Lacke können auch als transparente Decklacke im Bereich der Kraftfahrzeuglackierung eingesetzt werden. Mit diesen Lacken werden Lackierungen erhalten, die insbesondere bei Anwendung von erhöhten Einbrenntemperaturen und/oder verlängerten Einbrennzeiten vergilben und die insbesondere hinsichtlich der Beständigkeit gegenüber Säuren und organischen Lösemitteln sowie hinsichtlich der Kratzbeständigkeit verbessert werden sollten.

Eine Verbesserung der Eigenschaften der Lacke läßt sich durch den Einsatz spezieller Vernetzungsmittel erreichen. Hier sind insbesondere die aus den US-PS 5084541, 4939213, 5288865, 4710542 und den EP-Anmeldungen 0565774, 0541966, 0604922 und der EP-PS 0245700 bekannten Tris(Alkoxycarbonylamino)Triazine und deren Derivate zu nennen. Derartige Lacke zeichnen sich durch eine besonders gute Chemikalienfestigkeit aus, die sich in besonderer Weise in guten Ergebnissen bei der Freibewitterung in der Jacksonville/Florida zeigt. Die engmaschige Vernetzung solcher Formulierungen hat jedoch den Nachteil der erhöhten Empfindlichkeit gegenüber Feuchtigkeitsbelastungen, die sich in einem Weißanlaufen der Lackschichten nach derartigen Belastungen äußert.

Aufgabe der vorliegenden Erfindung ist es nunmehr ein Verfahren zur Herstellung einer mehrschichtigen Lackierung zur Verfügung zu stellen, bei dem ein

(1) ein ggfs. pigmentierter Basislack auf eine Substratoberfläche aufgebracht wird,
(2) aus der in Stufe (1) aufgebrachten Basislackschicht ein Polymerfilm gebildet wird,
(3) ggfs. hierauf ein oder mehrere weitere Lackschichten aufgetragen werden,
(4) sodann ein nicht-wäßriger Decklack aufgebracht wird, der

A) ein hydroxyfunktionelles Polyacrylatharz,
B) als Vernetzungsmittel Tris(alkoxycarbonylamino)Triazin und
C) ggfs. weitere Vernetzungsmittel, wie blockierte Isocyanate, die verschieden von dem Tris(alkoxycarbonylamino)Triazin sind, und/oder Aminoplastharze enthält,

und anschließend
(5) die Lackschichten zusammen eingebrannt werden, welches zu Lackschichten führt, die sowohl bei der Freibewitterung in Jacksonville als auch bei Feuchtigkeitsbelastungen zu guten Ergebnissen führt.

Diese Aufgabe wird dadurch gelöst, daß das Polyacrylatharz sekundäre OH-Gruppen enthält.

Gegenstand der vorliegenden Erfindung ist demgemäß auch eine mehrschichtige Lackierung, enthaltend

(1) eine Schicht eines Polymerfilms eines ggfs. pigmentierten Basislacks, der auf eine Substratoberfläche aufgebracht ist,
(2) ggfs. ein oder mehrere hierauf aufgebrachte Lackschichten,
(3) eine Schicht eines nicht-wäßrigen Decklacks, der

A) ein hydroxyfunktionelles Polyacrylatharz,
B) als Vernetzungsmittel Tris(alkoxycarbonylamino)Triazin und
C) ggfs. weitere Vernetzungsmittel, wie blockierte Isocyanate, die verschieden von dem Tris(alkoxycarbonylamino)Triazin sind, und/oder Aminoplastharze enthält

und anschließend
(4) die Lackschichten zusammen eingebrannt werden,

**dadurch gekennzeichnet**, daß das Polyacrylatharz sekundäre OH-Gruppen enthält.

Die Erfindung betrifft schließlich auch die Verwendung der mehrschichtigen Lackierung zur Beschichtung von Automobilkarosserien.

Die nach dem erfindungsgemäßen Verfahren hergestellten Mehrschichtlackierungen zeichnen sich durch hohe Härte, hohen Glanz, gute Haftung zwischen Basislackschicht und Decklackschicht, guten Decklackstand, gute Kratzbeständigkeit und gute Beständigkeit gegen klimatische Einflüsse, organische Lösemittel und Säuren sowie hohe Resistenz gegenüber Vergilbung (insbesondere gegen Vergilbung die infolge von hohen Einbrenntemperaturen und/oder infolge von langen Einbrennzeiten auftritt) aus. Diese guten Eigenschaften werden auch bei Verwendung unterschiedlicher Basislacke erhalten. Die erfindungsgemäß eingesetzten transparenten Decklacke zeichnen sich außerdem durch hohe Lagerstabilität aus und können auch mit einem niedrigen Gehalt (z.B. kleiner als 50 Gew.-%) an organischen Lösemitteln gut verarbeitet werden. Insbesondere zeichnen sich die erfindungsgemäßen Lacke durch eine gute Beständigkeit gegenüber den speziellen Bewitterungseinflüssen in der Jacksonville-Auslage und eine geringe Empfindlichkeit gegenüber einer Feuchtigkeitsbelastung aus. Demzufolge ist das sonst zu beobachtende Weißanlaufen der Lackschichten bei der vorliegenden Erfindung nicht zu verzeichnen.

In der Stufe (1) des erfindungsgemäßen Verfahrens können im Prinzip alle zur Herstellung von zweischichtigen Lackierungen geeigneten pigmentierten Basislacke eingesetzt werden. Derartige Basislacke sind dem Fachmann gut bekannt. Es können sowohl wasserverdünnbare Basislacke als auch Basislacke auf Basis von organischen Lösemitteln eingesetzt werden. Geeignete Basislacke werden beispielsweise beschrieben in der US-A-3,639,147, DE-A-33 33 072, DE-A-38 14 853, GB-A-2 012 191, US-A-3,953,644, EP-A-260 447, DE-A-39 03 804, EP-A-320 552, DE-A-36 28 124, US-A-4,719,132, EP-A-297 576, EP-A-69 936, EP-A-89 497, EP-A-195 931, EP-A-228 003, EP-A-38 127 und DE-A-28 18 100. In diesen Patentdokumenten sind auch weitere Informationen über das in Rede stehende basecoat/clearcoat-Verfahren zu finden.

In Stufe (2) des erfindungsgemäßen Verfahrens werden dem in Stufe (1) applizierten Basislack in einer Abdunstphase die Lösemittel bzw. das Wasser entzogen. Die Basislackschicht kann auch eingebrannt werden. Das ist aber aus ökonomischen Gründen nachteilig, weil dann zur Herstellung der Mehrschichtlackierung mehrere Einbrennvorgänge anstelle von einem Einbrennvorgang benötigt werden.

In der Stufe (3) des erfindungsgemäßen Verfahrens werden vorzugsweise transparente nicht-wäßrige Lacke eingesetzt.

Hydroxylgruppenhaltige Polyacrylatharze sind gut bekannt. Beispiele für solche Harze und deren Herstellung werden beispielsweise in der JP-A-2-24 28 67, DE-B-26 39 491 sowie in den auf Seite 6 in den Zeilen 31 bis 36 genannten Patentdokumenten beschrieben.

In dem erfindungsgemäßen Verfahren werden vorzugsweise als Komponente (A) Polyacrylatharze eingesetzt, die Hydroxylzahlen von 100 bis 200, Säurezahlen von 0 bis 35, bevorzugt 0 bis 23, ganz besonders bevorzugt 3,9 bis 15,5, Glasübergangstemperaturen von -35 bis +70 °C, bevorzugt -20 bis +40 °C, ganz besonders bevorzugt -20 bis +15 °C und zahlenmittlere Molekulargewichte von 1500 bis 30000, bevorzugt 2000 bis 15040, ganz besonders bevorzugt 2500 bis 5000 aufweisen.

Als Komponente (A) werden besonders bevorzugt Polyacrylatharze eingesetzt, die herstellbar sind, indem

(a) 10 bis 92, vorzugsweise 20 bis 70 Gew.-% eines Alkyl- oder Cycloalkylacrylates oder eines Alkyl-oder Cycloalkylmethacrylates mit 1 bis 18, vorzugsweise 4 bis 13 Kahlenstofiatomen im Alkyl- bzw. Cycloalkylrest oder Mischungen aus solchen Monomeren

(b) 8 bis 60, vorzugsweise 12,5 bis 51 Gew.-% eines Hydroxyalkylacrylates oder eines Hydroxylalkylmethacrylates mit 2 bis 4 Kohlenstoffatomen im Hydroxyalkylrest oder Mischungen aus solchen Monomeren, wobei die Gesamtmenge der hydroxyfunktionellen Acrylate oder Methacrylate aus 10 bis 90 Gew.-%, vorzugsweise 20 bis 80 hydroxyfunktionellen Acrylaten oder Methacrylaten mit primären OH-Gruppen und 90 bis 10 Gew.-%, vorzugsweise 20 bis 80 Gew.-% hydroxyfunktionellen Acrylaten oder Methacrylaten mit sekundären OH-Gruppen kombiniert wird,

(c) 0,0 bis 5,0, vorzugsweise 0,0 bis 3,0 Gew.-% Acrylsäure oder Methacrylsäure oder Mischungen aus diesen Monomeren und

(d) 0 bis 50, vorzugsweise 0 bis 40 Gew.-% von (a), (b) und (c) verschiedene, mit (a), (b) und (c) copolymerisierbare ethylenisch ungesättigte Monomere oder Mischungen aus solchen Monomeren umgesetzt werden.

Ganz besonders bevorzugt werden Polyacrylatharze, die herstellbar sind, indem

(a)20 bis 60 eines Alkyl- oder Cycloalkylacrylates oder eines Alkyl- oder Cycloalkylmethacrylates mit 1 bis 18, vorzugsweise 4 bis 13 Kohlenstoffatomen im Alkyl- bzw. Cy-cloalkylrest oder Mischungen aus solchen Monomeren

(b) 20 bis 41 Gew.-% eines Hydroxyalkylacrylates oder eines Hydroxylalkylmethacrylates mit 2 bis 4 Kohlenstoffatomen im Hydroxyalkylrest oder Mischungen aus solchen Monomeren, wobei die Gesamtmenge der hydroxyfunktionellen Acrylate oder Methacrylate aus 25 bis 50 Gew.-% hydroxyfunktionellen Acrylate oder Methacrylaten mit primären OH-Gruppen und 75 bis 50 Gew.-% hydroxyfunktionellen Acrylaten oder Methacrylaten mit sekundären OH-Gruppen kombiniert wird,

(c) 0,5 bis 2 Gew.-% Acrylsäure oder Methacrylsäure oder Mischungen aus diesen Monomeren und

(d) 0 bis 30 Gew.-% von (a), (b) und (c) verschiedene, mit (a), (b) und (c) copolymerisierbare ethylenisch ungesättigte Monomere oder Mischungen aus solchen Monomeren umgesetzt werden.

Als Beispiele für (a)-Komponenten werden genannt:

Methyl-, Ethyl-, Propyl-, n-Butyl-, Isobutyl-, tert.-Butyl-, Pentyl-, Hexyl-, Heptyl- und 2-Ethyl-hexylacrylat bzw. -methacrylat sowie Cyclohexylacrylat und Cyclohexylmethacrylat.

Als Beispiele für (b)-Komponenten mit primären OH-Gruppen werden genannt:

2-Hydroxyethylacrylat, 2-Hydroxyethylmethacrylat, 4-Hydroxybutylacrylat, 4-Hydroxybutylmethacrylat sowie deren Addukte mit E-Caprolacton;

als Beispiele für (b)-Komponenten mit sekundären OH-Gruppen werden genannt:

2-Hydroxypropylacrylat, 2-Hydroxypropylmethacrylat sowie die Addukte von Acrylsäure und Methacrylsäure mit dem Glycidylester der Versaticsäure.

Als Beispiele für (d)-Komponenten werden genannt:

Vinylaromaten, wie beispielsweise Styrol, Vinyltoluol, $\alpha$-Methylstyrol, $\alpha$-Ethylstyrol, kemsubstituierte Di-ethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat, Vinylbutyrat, Vinylpivalat und der Vinylester der 2-Methyl-2-ethylheptansäure.

Die Hydroxylzahl und die Säurezahl der Polyacrylatharze kann der Fachmann problemlos durch die Menge an eingesetzter Komponente (b) bzw. (c) steuern.

Die Glasübergangstemperatur der Polyacrylatharze wird durch Art und Menge der eingesetzten Monomere bestimmt. Die Auswahl der Monomeren kann vom Fachmann unter Zuhilfenahme der folgenden Formel, mit der die Glasübergangstemperaturen von Polyacrylatharzen näherungsweise berechnet werden können, vorgenommen werden:

$$\frac{1}{T_G} = \sum_{n=1}^{n=x} \frac{W_n}{T_{Gn}}$$

$T_G$ = Glasübergangstemperatur des Polyacrylatharzes
x = Anzahl der im Polyacrylatharz einpolymerisierten verschiedenen Monomeren.
$W_n$ = Gewichtsanteil des n-ten Monomers
$T_{Gn}$ = Glasübergangstemperatur des Homopolymers aus dem n-ten Monomer

Maßnahmen zur Steuerung des Molekulargewichtes (z.B. Auswahl entsprechender Polymerisationsinitiatoren, Einsatz von Kettenübertragungsmitteln usw.) gehören zum Fachwissen des Durchschnittsfachmanns und müssen hier nicht näher erläutert werden.

Als Komponente (A) können auch Gemische der beschriebenen Polyacrylatharze mit anderen Kunstharzen eingesetzt werden. Beispiele sind Polyesterharze bzw. Alkydharze, die herstellbar sind, indem

($\alpha$) eine cycloaliphatische oder aliphatische Polycarbonsäure oder eine Mischung aus solchen Polycarbonsäuren
($\beta$) ein aliphatisches oder cycloaliphatisches Polyol mit mehr als zwei Hydroxylgruppen im Molekül oder eine Mischung aus solchen Polyolen
($\gamma$) ein aliphatisches oder cycloaliphatisches Diol oder eine Mischung aus solchen Diolen und
($\delta$) eine aliphatische lineare oder verzweigte gesättigte Monocarbonsäure oder eine Mischung aus solchen Monocarbonsäuren

in einem molaren Verhältnis von ($\alpha$) : ($\beta$) : ($\gamma$) : ($\delta$) = 1,0 : 0,2 - 1,3 : 0,0 - 1,1 : 0,0 - 1,4, vorzugsweise 1,0 : 0,5 - 1,2 : 0,0 - 0,6 : 0,2 - 0,9 zu einem Polyesterharz bzw. Alkydharz umgesetzt werden.

Als Beispiele für die Komponente ($\alpha$) werden genannt: Hexahydrophtalsäure, 1,4-Cyclohexandicarbonsäure, Endomethylentetrahydrophtalsäure, Oxalsäure, Malonsäure, Bernsteinsäure, Glutarsäure, Adipinsäure, Pimelinsäure, Korksäure, Azelainsäure und Sebacinsäure.

Als Beispiele für die Komponente (β) werden genannt: Pentaerythrit, Trimethylolpropan, Trimethylolethan und Glycerin.

Als Beispiele für die Komponente (γ) werden genannt: Ethylenglykol, Diethylenglykol, Propylenglykol, Neopentylglykol, 2-Methyl-2-propylpropandiol-1,3,2-Ethyl-2-butylpropandiol-1,3, 2,2,4-Trimethylpentandiol-1,5, 2,2,5-Trimethylhexandiol-1,6, Hydroxypivalinsäureneo-pentylglykolester und Dimethylolcyclohexan.

Als Beispiele für die Komponente (δ) werden genannt: 2-Ethylhexansäure, Laurinsäure, Isooctansäure, Isononansäure und Monocarbonsäuremischungen, die aus Kokosfett oder Palmkenzfett gewonnen werden.

Die Herstellung von Hydroxylgruppen tragenden Polyester- und/oder Alkydharzen ist z.B. in Ullmanns Encyklopädie der technischen Chemie, dritte Auflage, 14. Band, Urban & Schwarzenberg, München, Berlin 1863, Seiten 80 bis 89 und Seiten 99 bis 105, in den Büchern: Résines Alkydes-Polyesters von J. Bourry, Paris Verlag Dunod 1952, Alkyd Resins von C.R. Martens, Reinhold Publishing Corporation, New York 1961 und Alkyd Resin Technology von T. C. Patton, Interscience Publishers 1962 beschrieben.

Als Komponente (B) werden Tris(Alkoxycarbonylamino)Triazine gemäß der US-PS 4 939 213, der US-PS 5 084 541 und der EP 0 624 577 eingesetzt. Ebenso können Derivate der genannten Verbindungen zum Einsatz kommen.

Die Tris(Alkoxycarbonylamino)Triazine und deren Derivate können erfindungsgemäß auch im Gemisch mit herkömmlichen Vernetzungsmitteln eingesetzt werden (Komponente C). Hier kommen insbesondere von den Tris(Alkoxycarbonylamino)Triazinen verschiedene blockierte Polyisocyanate in Betracht. Ebenso sind Aminoplastharze z.B. Melamine, einsetzbar.

Im Prinzip kann jedes für transparente Decklacke geeignete Aminoplastharz oder eine Mischung aus solchen Aminoplastharzen eingesetzt werden.

Derartige Harze sind dem Fachmann gut bekannt und werden von vielen Firmen als Verkaufsprodukte angeboten. Aminoplastharze sind Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder vollständig mit Alkoholen verethert sind.

Als Komponente (C) werden vorzugsweise mit niedrigen Alkoholen, insbesondere mit Methanol oder Butanol veretherte Melamin-Formaldehydharze eingesetzt.

Besonders bevorzugt werden mit niedrigen Alkoholen, insbesondere mit Methanol und/oder Butanol veretherte Melamin-Formaldehydharze, die im statistischen Mittel pro Triazinring noch 0,1 bis 0,25 an Stickstoffatome gebundene Wasserstoffatome enthalten, als Komponente (C) eingesetzt.

Die erfindungsgemäß eingesetzten Decklacke können auch als Komponente (C) ein blockiertes Polyisocyanat oder eine Mischung aus blockierten Polyisocyanaten enthalten.

Prinzipiell können alle auf dem Lackgebiet einsetzbaren Polyisocyanate zur Herstellung der Komponente (C) eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethandiisocyanat und 1,3-Bis-(2-isocyanatopropyl-2-)benzol (TMXDI) sowie Addukte dieser Polyisocyanate an Polyole, insbesondere nieder-molekulare Polyole, wie z.B. Trimethylolpropan und von diesen Polyisocyanaten abgeleitete isocyanuratgruppen- und/oder biuretgruppenhaltige Polyisocyanate.

Als Polyisocyanate werden besonders bevorzugt Hexa-methylendiisocyanat und Isophorondiisocyanat, von die-sen Diisocyanaten abgeleitete isocyanurat- oder biuretgruppenhaltige Polyisocyanate, die vorzugsweise mehr als zwei Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 - 0,5 Äquivalenten eines niedermolekularen Polyols mit einem Molekulargewicht von 62 bis 500, vorzugsweise von 104 bis 204, insbesondere eines Triols, wie zum Beispiel Trimethylolpropan, eingesetzt.

Als Blockierungsmittel können Dialkylmalonate oder eine Mischung aus Dialkylmalonaten eingesetzt werden.

Als Beispiele für einsetzbare Dialkylmalonate seien Dialkylmalonate mit je 1 bis 6 Kohlenstoffatomen in den Alkylresten genannt, wie z.B. Malonsäuredimethylester und Malonsäurediethylester, wobei Malonsäurediethyl-ester bevorzugt eingesetzt wird.

Weiterhin sind andere aktive Methylengruppen enthaltende Blockierungsmittel und Oxime sowie Mischungen aus diesen Blockierungsmitteln einsetzbar.

Als Beispiele seien genannt: Acetessigsäuremethyl-, ethyl-, -propyl-, butyl-, -pentyl-, hexyl-, heptyl-, octyl-, nonyl-, -decyl- oder -dodecyl-ester, Acetonoxim, Methylethylketoxim, Acetylaceton, Formaldoxim, Acetaldoxim, Benzophenoxim, Acetoxim und Dilsobutylketoxim.

Die Komponenten (A), (B) und (C) werden in den erfindungsgemäß eingesetzten transparenten Decklacken im allgemeinen in solchen Mengen eingesetzt, daß die Komponente (A) in einer Menge von 20 bis 80, vorzugsweise 30 bis 60 Gew.-%, die Komponente (B) in einer Menge von 1 bis 50, vorzugsweise 5 bis 35 Gew.-% und die Komponente (C) in einer Menge von 0 bis 50, vorzugsweise 0 bis 35 Gew.-% vorhanden ist, wobei die Gewichtsprozentangaben auf (A) + (B) + (C) = 100 Gew.-% und auf den Feststoffanteil der Komponente (A), (B) und (C) bezogen sind.

Die erfindungsgemäß eingesetzten transparenten Decklacke enthalten vorzugsweise keine bzw. nur transparente Pigmente. Als organische Lösemittel enthalten die Decklacke übliche zur Herstellung von Lacken gebräuchliche organische Lösemittel. Die Decklacke können außerdem noch weitere gebräuchliche Zusätze, wie z.B. Lichtschutzmittel, Verlaufshilfsmittel usw. enthalten.

Die erfindungsgemäßen Mehrschichtlackierungen weisen die vorteilhaften Eigenschaften insbesondere auch dann auf, wenn sie unter den zur Zeit bei der Automobilserienlackierung angewandten Einbrennbedingungen (30 Minuten bei 130°C oder 20 Minuten bei 140°C) eingebrannt worden sind.

Die Erfindung wird in den folgenden Beispielen näher erläutert. Alle Mengen- und Prozentangaben sind, wenn nicht ausdrücklich etwas anderes festgestellt wird, als Gewichtsangaben zu verstehen.

Acrylatharz A (erfindungsgemäß)

In einem Labor-Reaktor mit einem Nutzvolumen von 4 1 ausgestattet mit zwei Tropftrichtern für die Monomermischung resp. Initiatorlösung, Stickstoff-Einleitungsrohr, Thermometer und Rückflußkühler werden 731 g einer Fraktion aromatischer Kohlenwasserstoffe mit einem Siedebereich von 158 bis 172 °C eingewogen. Das Lösemittel wird auf 140 °C aufgeheizt. Nach Erreichen von 140 °C werden eine Monomermischung aus 458 g Ethylhexylmethacrylat, 183 g n-Butylmethacrylat, 214 g Styrol, 183 g 2-Hydroxyethylacrylat, 458 g 2-Hydroxypropylmethacrylat und 31 g Acrylsäure innerhalb von 4 Stunden, und eine Initiatorlösung von 153 g t-Butylperethylhexanoat in 92 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140 °C gehalten und danach abgekühlt. Die resultierende Polymerlösung hat einen Feststoffgehalt von 65 % (bestimmt in einem Umluftofen 1 h bei 130 °C), eine Säurezahl von 17 und eine Viskosität von 24,5 dPas (gemessen an einer 60 %-igen Anlösung der Polymerlösung in dem beschriebenen aromatischen Lösemittel, unter Verwendung eines ICI-Platte-Kegel Viskosimeters bei 23 °C).

Acrylatharz B (Vergleichsbeispiel)

In einem Labor-Reaktor mit einem Nutzvolumen von 4 1 ausgestattet mit zwei Tropftrichtern für die Monomermischung resp. Initiatorlösung, Stickstoff-Einleitungsrohr, Thermometer und Rückflußkühler werden 731 g einer Fraktion aromatischer Kohlenwasserstoffe mit einem Siedebereich von 158 bis 172 °C eingewogen. Das Lösemittel wird auf 140 °C aufgeheizt. Nach Erreichen von 140 °C werden eine Monomermischung aus 763 g Ethylhexylmethacrylat, 122 g n-Butylmethacrylat, 214 g Styrol, 397 g 4-Hydroxybutylacrylat und 31 g Acrylsäure innerhalb von 4 Stunden, und eine Initiatorlösung von 153 g t-Butylperethylhexanoat in 92 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140 °C gehalten und danach abgekühlt. Die resultierende Polymerlösung hat einen Feststoffgehalt von 65 % (bestimmt in einem Umluftofen 1 h bei 130 °C), eine Säurezahl von 17 und eine Viskosität von 3,8 dPas (gemessen an einer 60 %-igen Anlösung der Polymerlösung in dem beschriebenen aromatischen Lösemittel, unter Verwendung eines ICI-Platte-Kegel Viskosimeters bei 23 °C).

Acrylatharz C (Vergleichsbeispiel)

In einem Labor-Reaktor mit einem Nutzvolumen von 4 1 ausgestattet mit zwei Tropftrichtern für die Monomermischung resp. Initiatorlösung, Stickstoff-Einleitungsrohr, Thermometer und Rückflußkühler werden 731 g einer Fraktion aromatischer Kohlenwasserstoffe mit einem Siedebereich von 158 bis 172 °C eingewogen. Das Lösemittel wird auf 140 °C aufgeheizt. Nach Erreichen von 140 °C werden eine Monomermischung aus 546 g Ethylhexylmethacrylat, 183 g n-Butylmethacrylat, 214 g Styrol, 552 g 2-Hydroxyethylacrylat und 31 g Acrylsäure innerhalb von 4 Stunden, und eine Initiatorlösung von 153 g t-Butylperethylhexanoat in 92 g des beschriebenen aromatischen Lösemittels innerhalb von 4,5 Stunden gleichmäßig in den Reaktor dosiert. Mit der Dosierung der Monomermischung und der Initiatoranlösung wird gleichzeitig begonnen. Nach Beendigung der Initiatordosierung wird die Reaktionsmischung zwei weitere Stunden auf 140 °C gehalten und danach abgekühlt. Die resultierende Polymerlösung hat einen Feststoffgehalt von 65 % (bestimmt in einem Umluftofen 1 h bei 130 °C), eine Säurezahl von 19 und eine Viskosität von 19 dPas (gemessen an einer 60 %-igen Anlösung der Polymerlösung in dem beschriebenen aromatischen Lösemittel, unter Verwendung eines ICI-Platte-Kegel Viskosimeters bei 23 °C).

Tabelle 1

|  | Acrylatharz A | Acrylatharz B | Acrylatharz C |
|---|---|---|---|
| EHMA[1] | 458 | 763 | 546 |
| nBMA[2] | 183 | 122 | 183 |
| Styrol | 214 | 214 | 214 |
| 2-HEA[3] | 183 | ---- | 552 |
| 4-HBA[4] | ---- | 397 | ---- |
| HPMA[5] | 458 | ---- | ---- |
| AS[6] | 31 | 31 | 31 |
| TBPEH[7] | 153 | 153 | 153 |

[1] 2-Ethylhexylmethacrylat
[2] n-Butylmethacrylat
[3] 2-Hydroxyethylacrylat
[4] 4-Hydroxybutylacrylat
[5] 2-Hydroxypropylmethacrylat
[6] Acrylsäure
[7] tert.-Butylperethylhexanoat

Herstellung der Klarlacke

Die Klarlacke werden hergestellt, indem man die Polyacrylatharzlösungen einwiegt, dann unter Rühren die in Tab. 2 angegebenen Mengen Triazinvernetzer, Lösemittel, UV-Adsorber, Radikalfänger und Verlaufsmittel zugibt und gut einrührt. Die erhaltenen Lacke werden ggfs. für die Applikation mit Xylol auf eine Viskosität von 23 sec (gemessen mit einem DIN-4 Becher bei 20 °C) eingestellt.

Tabelle 2

|  | Klarlack A | Klarlack B | Klarlack C |
|---|---|---|---|
| Acrylatharz A | 55,0 | ----- | ---- |
| Acrylatharz B | --- | 62,4 | ---- |
| Acrylatharz C | ---- | ---- | 55,0 |
| Triazinvernetzer[1] | 28,2 | 18,5 | 28,2 |
| UV-Absorber[2] | 0,8 | 0,9 | 0,8 |
| Radikalfanger[3] | 1,0 | 1,1 | 1,0 |
| Verlaufsmittel[4] | 1,5 | 1,7 | 1,5 |
| Benzin 180/210 | 6,0 | 6,8 | 6,0 |
| Xylol | 2,5 | 2,8 | 2,5 |
| Solvesso 150 | 7,1 | 6,0 | 6,0 |
| Weißanlaufen[5] | nein | nein | ja |
| Jacksonville-Note[6] | 3,5 | 10 | 4 |

[1] Triazinvernetzer gemäß US 4939213, US5084541 (Cytec)
[2] handelsübliche UV-Absorber der Benztriazolklasse
[3] handelsüblicher Radikalfänger auf Basis eines sterisch gehinderten Amins
[4] handelsübliches Verlaufsmittel auf Basis eines Polydimethylsiloxans
[5] Weißanlaufen nach Feuchtigkeitsbelastung (240 h/40°C, 100 % rel. Luftfeuchte)
[6] Blechauslage in Jacksonville/Florida; Note 1 (gut) - 10 (schlecht)

**Patentansprüche**

**Patentansprüche für folgende Vertragsstaaten : AT, CH, DK, FI, GR, LI, NL**

**1.**  Verfahren zur Herstellung einer mehrschichtigen Lackierung, bei dem

(1) ein ggfs. pigmentierter Basislack auf eine Substratoberfläche aufgebracht wird,

(2) aus der in Stufe (1) aufgebrachten Basislackschicht ein Polymerfilm gebildet wird,

(3) ggfs. hierauf ein oder mehrere weitere Lackschichten aufgetragen werden,

(4) sodann ein nicht-wäßriger Decklack aufgebracht wird, der

A) ein sekundäre OH-Gruppen enthaltendes hydroxyfunktionelles Polyacrylatharz mit einer Hydroxylzahl von 100 bis 200,

B) als Vernetzungsmittel Tris(alkoxycarbonylamino)Triazin und

C) ggfs. weitere Vernetzungsmittel, wie blockierte Isocyanate, die verschieden von dem Tris(alkoxycarbonylamino)Triazin sind, und/oder Aminoplastharze

enthält
und anschließend
(5) die Lackschichten zusammen eingebrannt werden.

2. Mehrschichtige Lackierung enthaltend

(1) eine Schicht eines Polymerfilms eines ggfs. pigmentierten Basislacks, der auf eine Substratoberfläche aufgebracht ist,

(2) ggfs. ein oder mehrere hierauf aufgebrachte Lackschichten,

(3) eine Schicht eines nicht-wäßrigen Decklacks, der

A) ein sekundäre OH-Gruppen enthaltendes hydroxyfunktionelles Polyacrylatharz mit einer Hydroxylzahl von 100 bis 200,

B) als Vernetzungsmittel Tris(alkoxycarbonylamino)Triazin und

C) ggfs. weitere Vernetzungsmittel, wie blockierte Isocyanate, die verschieden von dem Tris(alkoxycarbonylamino)Triazin sind, und/oder Aminoplastharze

enthält
und anschließend
(4) die Lackschichten zusammen eingebrannt werden.

3. Verfahren oder mehrschichtige Lackierung nach einem der Ansprüche 1 oder 2,
**dadurch gekennzeichnet, daß** der Decklack transparent ist.

4. Verfahren oder mehrschichtige Lackierung nach einem der Ansprüche 1 bis 3,
**dadurch gekennzeichnet, daß** das Polyacrylatharz eine Säurezahl von 0 bis 35, vorzugsweise von 0 bis 23, eine Glasübergangstemperatur von -35 bis
+70 °C, vorzugsweise von -20 bis +40 °C und ein zahlenmittleres Molekulargewicht von 1500 bis 30000, vorzugsweise von 2000 bis 15000 aufweist.

5. Verfahren oder mehrschichtige Lackierung nach einem der Ansprüche 1 bis 4,
**dadurch gekennzeichnet, daß** das Polyacrylatharz eine Säurezahl von 3,9 bis 15,5, eine Glasübergangstemperatur von -20 bis +15 °C, und ein zahlenmittleres Molekulargewicht von 2500 bis 5000 aufweist.

6. Verfahren oder mehrschichtige Lackierung nach einem der Ansprüche 1 bis 5,
**dadurch gekennzeichnet, daß** die Komponente (A)

a) 10 bis 92 Gew.-%, vorzugsweise 20 bis 70 Gew.-% eines Alkyl- oder Cycloalkylacrylats oder eines Alkyl- oder Cycloalkylmethacrylats mit 1 bis 18, vorzugsweise 4 bis 13 Kohlenstoffatomen im Alkyl- bzw Cycloalkylrest oder Mischungen aus solchen Monomeren,

b) 8 bis 60 Gew.-%, vorzugsweise 12,5 bis 51 Gew.-% einer Mischung aus hydroxyfunktionellen Acrylaten oder Methacrylaten mit 2 bis 4 Kohlenstoffatomen im Hydroxyalkylrest, wobei die Gesamtmenge der hydroxyfunktionellen Acrylate oder Methacrylate aus 10 bis 90 Gew.-%, vorzugsweise 20 bis 80 Gew.-% hydroxyfunktionellen Acrylaten oder Methacrylaten mit primären OH-Gruppen und 90 bis 10 Gew.-%, vorzugsweise 80 bis 20 Gew.-% hydroxyfunktionellen Acrylaten oder Methacrylaten mit sekundären OH-Gruppen kombiniert wird,

c) 0 bis 5 Gew.-%, vorzugsweise 0 bis 3 Gew.-% Acrylsäure bzw. Methacrylsäure oder Mischungen aus diesen Monomeren und

d) 0 bis 50 Gew.-%, vorzugsweise 0 bis 40 Gew.-% von a), b) und c) verschiedene, mit a), b) und c) copolymerisierbaren ethylenisch ungesättigten Monomeren oder Mischungen aus solchen Monomeren enthält.

**7.** Verfahren oder mehrschichtige Lackierung nach einem der Ansprüche 1 bis 6,
**dadurch gekennzeichnet, daß** die Komponente (A)

a) 20 bis 60 Gew.-% eines Alkyl- oder Cycloalkylacrylats oder eines Alkyl- oder Cycloalkylmethacrylats mit 1 bis 18, vorzugsweise 4 bis 13 Kohlenstoffatomen im Alkyl- bzw. Cycloalkylrest oder Mischungen aus solchen Monomeren,
b) 20 bis 41 Gew.% einer Mischung aus hydroxyfunktionellen Acrylaten oder Methacrylaten mit 2 bis 4 Kohlenstoffatomen im Hydroxyalkylrest, wobei die Gesamtmenge der hydroxyfunktionellen Acrylate oder Methacrylate aus 25 bis 50 Gew.% hydroxyfunktionellen Acrylaten oder Methacrylaten mit primären OH-Gruppen und 75 bis 50 Gew.-% hydroxyfunktionellen Acrylaten oder Methacrylaten mit sekundären OH-Gruppen kombiniert wird,
c) 0,5 bis 2 Gew.-% Acrylsäure bzw. Methacrylsäure oder Mischungen aus diesen Monomeren und
d) 0 bis 30 Gew.-% von a), b) und c) verschiedene, mit a), b) und c) copolymerisierbaren ethylenisch ungesättigten Monomeren oder Mischungen aus solchen Monomeren

enthält.

**8.** Verwendung der mehrschichtigen Lackierung nach einem der Ansprüche 2 bis 7 zur Beschichtung von Automobilkarosserien.

**Patentansprüche für folgende Vertragsstaaten : BE, DE, ES, FR, GB, IT, PT, SE**

**1.** Verfahren zur Herstellung einer mehrschichtigen Lackierung, bei dem

(1) ein ggfs. pigmentierter Basislack auf eine Substratoberfläche aufgebracht wird,
(2) aus der in Stufe (1) aufgebrachten Basislackschicht ein Polymerfilm gebildet wird,
(3) ggfs. hierauf ein oder mehrere weitere Lackschichten aufgetragen werden,
(4) sodann ein nicht-wäßriger Decklack aufgebracht wird, der

A) ein sekundäre OH-Gruppen enthaltendes hydroxyfunktionelles Polyacrylatharz mit einer Hydroxylzahl von 100 bis 200,
B) Vernetzungsmittel

enthält
und anschließend
(5) die Lackschichten zusammen eingebrannt werden,

**dadurch gekennzeichnet, daß** das Vernetzungsmittel
Tris(alkoxycarbonylamino)Triazin oder
Tris(alkoxycarbonylamino)Triazin und Aminoplastharz oder
Tris(alkoxycarbonylamino)Triazin und Aminoplastharz und blockierte Isocyanate, die verschieden von dem Tris(alkoxycarbonylamino)Triazin sind, ist.

**2.** Mehrschichtige Lackierung enthaltend

(1) eine Schicht eines Polymerfilms eines ggfs. pigmentierten Basislacks, der auf eine Substratoberfläche aufgebracht ist,
(2) ggfs. ein oder mehrere hierauf aufgebrachte Lackschichten,
(3) eine Schicht eines nicht-wäßrigen Decklacks, der

A) ein sekundäre OH-Gruppen enthaltendes hydroxyfunktionelles Polyacrylatharz mit einer Hydroxylzahl von 100 bis 200,

B) Vernetzungsmittel
enthält
und anschließend

(4) die Lackschichten zusammen eingebrannt werden,

**dadurch gekennzeichnet, daß** das Vernetzungsmittel
Tris(alkoxycarbonylamino)Triazin oder
Tris(alkoxycarbonylamino)Triazin und Aminoplastharz oder Tris(alkoxycarbonylamino)Triazin und Aminoplastharz
und blockierte Isocyanate, die verschieden von dem Tris(alkoxycarbonylamino)Triazin sind, ist.

3. Verfahren oder mehrschichtige Lackierung nach einem der Ansprüche 1 oder 2, **dadurch gekennzeichnet, daß**
der Decklack transparent ist.

4. Verfahren oder mehrschichtige Lackierung nach einem der Ansprüche 1 bis 3,
**dadurch gekennzeichnet, daß** das Polyacrylatharz eine Säurezahl von 0 bis 35, vorzugsweise von 0 bis 23, eine
Glasübergangstemperatur von -35 bis +70°C, vorzugsweise von -20 bis +40°C und ein zahlenmittleres Molekulargewicht von 1500 bis 30000, vorzugsweise von 2000 bis 15000 aufweist.

5. Verfahren oder mehrschichtige Lackierung nach einem der Ansprüche 1 bis 4,
**dadurch gekennzeichnet, daß** das Polyacrylatharz eine Säurezahl von 3,9 bis 15,5, eine Glasübergangstemperatur von -20 bis +15°C, und ein zahlenmittleres Molekulargewicht von 2500 bis 5000 aufweist.

6. Verfahren oder mehrschichtige Lackierung nach einem der Ansprüche 1 bis 5,
**dadurch gekennzeichnet, daß** die Komponente (A)

a) 10 bis 92 Gew.-%, vorzugsweise 20 bis 70 Gew.-% eines Alkyl- oder Cycloalkylacrylats oder eines Alkyl-
oder Cycloalkylmethacrylats mit 1 bis 18, vorzugsweise 4 bis 13 Kohlenstoffatomen im Alkyl- bzw. Cycloalkylrest oder Mischungen aus solchen Monomeren,
b) 8 bis 60 Gew.-%, vorzugsweise 12,5 bis 51 Gew.-% einer Mischung aus hydroxyfunktionellen Acrylaten
oder Methacrylaten mit 2 bis 4 Kohlenstoffatomen im Hydroxyalkylrest, wobei die Gesamtmenge der hydroxyfunktionellen Acrylate oder Methacrylate aus 10 bis 90 Gew.-%, vorzugsweise 20 bis 80 Gew.-% hydroxyfunktionellen Acrylaten oder Methacrylaten mit primären OH-Gruppen und 90 bis 10 Gew.-%, vorzugsweise
80 bis 20 Gew.-% hydroxyfunktionellen Acrylaten oder Methacrylaten mit sekundären OH-Gruppen kombiniert
wird,
c) 0 bis 5 Gew.-%, vorzugsweise 0 bis 3 Gew.-% Acrylsäure bzw. Methacrylsäure oder Mischungen aus diesen
Monomeren und
d) 0 bis 50 Gew.-%, vorzugsweise 0 bis 40 Gew.-% von a), b) und c) verschiedene, mit a), b) und c) copolymerisierbaren ethylenisch ungesättigten Monomeren oder Mischungen aus solchen Monomeren enthält.

7. Verfahren oder mehrschichtige Lackierung nach einem der Ansprüche 1 bis 6,
**dadurch gekennzeichnet, daß** die Komponente (A)

a) 20 bis 60 Gew.-% eines Alkyl- oder Cycloalkylacrylats oder eines Alkyl- oder Cycloalkylmethacrylats mit 1
bis 18, vorzugsweise 4 bis 13 Kohlenstoffatomen im Alkyl- bzw. Cycloalkylrest oder Mischungen aus solchen
Monomeren,
b) 20 bis 41 Gew.-% einer Mischung aus hydroxyfunktionellen Acrylaten oder Methacrylaten mit 2 bis 4 Kohlenstoffatomen im Hydroxyalkylrest, wobei die Gesamtmenge der hydroxyfunktionellen Acrylate oder Methacrylate aus 25 bis 50 Gew.-% hydroxyfunktionellen Acrylaten oder Methacrylaten mit primären OH-Gruppen
und 75 bis 50 Gew.-% hydroxyfunktionellen Acrylaten oder Methacrylaten mit sekundären OH-Gruppen kombiniert wird,
c) 0,5 bis 2 Gew.-% Acrylsäure bzw. Methacrylsäure oder Mischungen aus diesen Monomeren und
d) 0 bis 30 Gew.-% von a), b) und c) verschiedene, mit a), b) und c) copolymerisierbaren ethylenisch ungesättigten Monomeren oder Mischungen aus solchen Monomeren enthält.

8. Verwendung der mehrschichtigen Lackierung nach einem der Ansprüche 2 bis 7 zur Beschichtung von Automobilkarosserien.

**Claims**

**Claims for the following Contracting States : AT, CH, DK, FI, GR, LI, NL**

1. Process for producing a multicoat paint system, in which

    (1) an optionally pigmented basecoat is applied to a substrate surface,
    (2) a polymer film is formed from the basecoat film applied in stage (1),
    (3) one or more further coating films are applied optionally thereto,
    (4) then a nonaqueous topcoat is applied which comprises

        A) a hydroxy-functional polyacrylate resin which comprises secondary OH groups and has a hydroxyl number of from 100 to 200,
        B) a crosslinking agent tris (alkoxycarbonylamino) triazin,
        C) optionally further crosslinking agents, such as blocked isocyanates, which are different from the tris (alkoxycarbonylamino)triazine, and/or amino resins,

    and subsequently
    (5) the coating films are baked together.

2. A multicoat paint system comprising

    (1) one coat of a polymer film of an optionally pigmented basecoat which has been applied to a substrate surface,
    (2) optionally one or more coating films applied thereto,
    (3) one coat of a nonaqueous topcoat which comprises

        A) a hydroxy-functional polyacrylate resin which comprises secondary OH groups and has a hydroxyl number of from 100 to 200,
        B) as crosslinking agent tris(alkoxycarbonylamino)triazane and
        C) optionally further crosslinking agents, such as blocked isocyanates, which are different from the tris (alkoxycarbonylamino)triazine, and/or amino resins,

    and subsequently
    (4) the coating films are baked together.

3. Process or multicoat paint system according to one of Claims 1 or 2,
   **characterized in that** the topcoat is transparent.

4. Process or multicoat paint system according to one of Claims 1 to 3,
   **characterized in that** the polyacrylate resin has an acid number of from 0 to 35, preferably from 0 to 23, a glass transition temperature of from -35 to +70EC, preferably from -20 to +40EC, and a number-average molecular weight of from 1500 to 30,000, preferably from 2000 to 15,000.

5. Process or multicoat paint system according to one of Claims 1 to 4,
   **characterized in that** the polyacrylate resin has an acid number of from 3.9 to 15.5, a glass transition temperature of from -20 to +15EC and a number-average molecular weight of from 2500 to 5000.

6. Process or multicoat paint system according to one of Claims 1 to 5,
   **characterized in that** component (A) comprises

        a) from 10 to 92, preferably from 20 to 70% by weight of an alkyl or cycloalkyl acrylate or of an alkyl or cycloalkyl methacrylate having 1 to 18, preferably 4 to 13 carbon atoms in the alkyl or cycloalkyl radical, or mixtures of such monomers,
        b) from 8 to 60, preferably from 12.5 to 51% by weight of a mixture of hydroxy-functional acrylates or hydroxy-functional methacrylates having 2 to 4 carbon atoms in the hydroxyalkyl radical, where the overall amount of the hydroxy-functional acrylates or methacrylates is combined from 10 to 90% by weight, preferably from 20 to 80% by weight of hydroxy-functional acrylates or methacrylates having primary OH groups and from 90 to 10% by weight, preferably from 80 to 20% by weight, of hydroxy-functional acrylates or methacrylates having secondary OH groups,

c) from 0 to 5, preferably from 0 to 3% by weight of acrylic acid or methacrylic acid, or mixtures of these monomers, and

d) from 0 to 50, preferably from 0 to 40% by weight of ethylenically unsaturated monomers which are different from but copolymerizable with a), b) and c), or mixtures of such monomers.

**7.** Process or multicoat paint system according to one of Claims 1 to 6,

**characterized in that** component (A) comprises

a) from 20 to 60% by weight of an alkyl or cycloalkyl acrylate or of an alkyl or cycloalkyl methacrylate having 1 to 18, preferably 4 to 13 carbon atoms in the alkyl or cycloalkyl radical, or mixtures of such monomers

b) from 20 to 41% by weight of a mixture of hydroxy-functional acrylates or hydroxy-functional methacrylates having 2 to 4 carbon atoms in the hydroxyalkyl radical, where the overall amount of the hydroxy-functional acrylates or methacrylates is combined from 25 to 50% by weight of hydroxy-functional acrylates or methacrylates having primary OH groups and from 75 to 50% by weight of hydroxy-functional acrylates or methacrylates having secondary OH groups,

c) from 0.5 to 2% by weight of acrylic acid or methacrylic acid, or mixtures of these monomers, and

d) from 0 to 30% by weight of ethylenically unsaturated monomers which are different from but copolymerizable with a), b) and c), or mixtures of such monomers.

**8.** Use of the multicoat paint system according to one of Claims 2 to 7 for coating car bodies.

**Claims for the following Contracting States : BE, DE, ES, FR, GB, IT, PT, SE**

**1.** Process for producing a multicoat paint system, in which

(1) an optionally pigmented basecoat is applied to a substrate surface,

(2) a polymer film is formed from the basecoat film applied in stage (1),

(3) one or more further coating films are applied optionally thereto,

(4) then a nonaqueous topcoat is applied which comprises

A) a hydroxy-functional polyacrylate resin which comprises secondary OH groups and has a hydroxyl number of from 100 to 200,

B) crosslinking agent,

and subsequently

(5) the coating films are baked together,

**characterized in that** the crosslinking agent is tris(alkoxycarbonylamino)triazine or tris(alkoxycarbonylamino)triazine and amino resin or tris(alkoxycarbonylamino)triazine and amino resin and blocked isocyanates which are different from the tris(alkoxycarbonylamino)triazine.

**2.** A multicoat paint system comprising

(1) one coat of a polymer film of an optionally pigmented basecoat which has been applied to a substrate surface,

(2) optionally one or more coating films applied thereto,

(3) one coat of a nonaqueous topcoat which comprises

A) a hydroxy-functional polyacrylate resin which comprises secondary OH groups and has a hydroxyl number of from 100 to 200,

B) crosslinking agent,

and subsequently

(4) the coating films are baked together,

**characterized in that** the crosslinking agent is tris(alkoxycarbonylamino)triazineor tris(alkoxycarbonylamino)triazine and amino resin or tris(alkoxycarbonylamino)triazine and amino resin and blocked isocyanates which are different from the tris(alkoxycarbonylamino)triazine.

3.  Process or multicoat paint system according to one of Claims 1 or 2,
    **characterized in that** the topcoat is transparent.

4.  Process or multicoat paint system according to one of Claims 1 to 3,
    **characterized in that** the polyacrylate resin has an acid number of from 0 to 35, preferably from 0 to 23, a glass transition temperature of from -35 to +70EC, preferably from -20 to +40EC, and a number-average molecular weight of from 1500 to 30,000, preferably from 2000 to 15, 000.

5.  Process or multicoat paint system according to one of Claims 1 to 4,
    **characterized in that** the polyacrylate resin has an acid number of from 3.9 to 15.5, a glass transition temperature of from -20 to +15EC and a number-average molecular weight of from 2500 to 5000,

6.  Process or multicoat paint system according to one of Claims 1 to 5,
    **characterised in that** component (A) comprises

    a) from 10 to 92, preferably from 20 to 70% by weight of an alkyl or cycloalkyl acrylate or of an alkyl or cycloalkyl methacrylate having 1 to 18, preferably 4 to 13 carbon atoms in the alkyl or cycloalkyl radical, or mixtures of such monomers,
    b) from 8 to 60, preferably from 12.5 to 51% by weight of a mixture of hydroxy-functional acrylates or hydroxy-functional methacrylates having 2 to 4 carbon atoms in the hydroxyalkyl radical, where the overall amount of the hydroxy-functional acrylates or methacrylates is combined from 10 to 90% by weight, preferably from 20 to 80% by weight of hydroxy-functional acrylates or methacrylates having primary OH groups and from 90 to 10% by weight, preferably from 80 to 20% by weight, of hydroxy-functional acrylates or methacrylates having secondary OH groups,
    c) from 0 to 5, preferably from 0 to 3% by weight of acrylic acid or methacrylic acid, or mixtures of these monomers, and
    d) from 0 to 50, preferably from 0 to 40% by weight of ethylenically unsaturated monomers which are different from but copolymerizable with a), b) and c), or mixtures of such monomers.

7.  Process or multicoat paint system according to one of Claims 1 to 6,
    **characterized in that** component (A) comprises

    a) from 20 to 60% by weight of an alkyl or cycloalkyl acrylate or of an alkyl or cycloalkyl methacrylate having 1 to 18, preferably 4 to 13 carbon atoms in the alkyl or cycloalkyl radical, or mixtures of such monomers
    b) from 20 to 41% by weight of a mixture of hydroxy-functional acrylates or hydroxy-functional methacrylates having 2 to 4 carbon atoms in the hydroxyalkyl radical, where the overall amount of the hydroxy-functional acrylates or methacrylates is combined from 25 to 50% by weight of hydroxy-functional acrylates or methacrylates having primary OH groups and from 75 to 50% by weight of hydroxy-functional acrylates or methacrylates having secondary OH groups,
    c) from 0.5 to 2% by weight of acrylic acid or methacrylic acid, or mixtures of these monomers , and
    d) from 0 to 30% by weight of ethylenically unsaturated monomers which are different from but copolymerizable with a), b) and c), or mixtures of such monomers.

8.  . Use of the multicoat paint system according to one of Claims 2 to 7 for coating car bodies.

**Revendications**

**Revendications pour les Etats contractants suivants : AT, CH, DK, FR, GR, LI, NL**

1.  Procédé de réalisation d'une peinture en plusieurs couches, dans lequel

    (1) une peinture de base le cas échéant pigmentée est appliquée sur la surface d'un support,

(2) un film de polymère est formé à partir de la couche de peinture de base appliquée lors de l'étape (1),
(3) une ou plusieurs autres couches de peinture sont le cas échéant appliquées sur celui-ci,
(4) une couche de recouvrement non aqueuse est ensuite appliquée et contient

    A) une résine de polyacrylate à fonctionnalités hydroxy qui contient des groupes OH secondaires et qui présente un indice d'hydroxyle de 100 à 200,
    B) de la tris(alcoxycarbonylamino)triazine en tant qu'agent de réticulation, et
    C) le cas échéant d'autres agents de réticulation, tels que des isocyanates bloqués, qui sont différents de la tris(alcoxycarbonylamino)triazine, et/ou des résines aminoplastiques,et,

(5) les couches de peinture sont ensuite cuites ensemble.

**2.** Peinture en plusieurs couches qui contient

(1) une couche de film polymère d'une peinture de base le cas échéant pigmentée, qui est appliquée sur la surface d'un support,
(2) le cas échéant une ou plusieurs couches de peinture appliquées sur celui-ci,
(3) une couche de peinture de recouvrement non aqueuse qui contient

    A) une résine de polyacrylate à fonctionnalités hydroxy qui contient des groupes OH secondaires et qui présente un indice d'hydroxyle de 100 à 200,
    B) de la tris(alcoxycarbonylamino)triazine en tant qu'agent de réticulation, et
    C) le cas échéant d'autres agents de réticulation, tels que des isocyanates bloqués, qui sont différents de la tris(alcoxycarbonylamino)triazine, et/ou des résines aminoplastiques, et

(4) les couches de peinture sont ensuite cuites ensemble.

**3.** Procédé ou peinture en plusieurs couches selon l'une des revendications de 1 ou 2, **caractérisé en ce que** la peinture de recouvrement est transparente.

**4.** Procédé ou peinture en plusieurs couches selon l'une quelconque des revendications de 1 à 3, **caractérisé en ce que** la résine de polyacrylate présente un indice d'acide de 0 à 35 et de préférence de 0 à 23, une température de transition vitreuse de -35 et +70°C et de préférence de -20 à +40°C et un poids moléculaire moyen en nombre de 1 500 à 30 000 et de préférence de 2 000 à 15 000.

**5.** Procédé ou peinture en plusieurs couches selon l'une quelconque des revendications de 1 à 4, **caractérisé en ce que** la résine de polyacrylate présente un indice d'acide de 3,9 à 15,5, une température de transition vitreuse de -20 à +15°C et un poids moléculaire moyen en nombre de 2 500 à 5 000.

**6.** Procédé ou peinture en plusieurs couches selon l'une quelconque des revendications de 1 à 5, **caractérisé en ce que** le composant (A) contient

a) de 10 à 92% en poids et de préférence de 20 à 70% en poids d'un acrylate d'alkyle, d'un acrylate de cycloalkyle, d'un méthacrylate d'alkyle ou d'un méthacrylate de cycloalkyle qui comportent de 1 à 18 et de préférence de 4 à 13 atomes de carbone dans le radical alkyle ou-dans le radical cycloalkyle ou des mélanges de ces monomères,
b) de 8 à 60% et de préférence de 12,5 à 51% en poids d'un mélange d'acrylates à fonctionnalités hydroxy ou de méthacrylates à fonctionnalités hydroxy qui présentent de 2 à 4 atomes de carbone dans le radical hydroxyalkyle, la quantité totale des acrylates à fonctionnalités hydroxy ou des métacrylates à fonctionnalités hydroxy étant composée de 10 à 90% en poids et de préférence de 20 à 80% en poids d'acrylates à fonctionnalités hydroxy ou de méthacrylates à fonctionnalités hydroxy qui présentent des groupes OH primaires et de 90 à 10% en poids et de préférence de 80 à 20% en poids d'acrylates à fonctionnalités hydroxy ou de méthacrylates à fonctionnalités hydroxy qui présentent des groupes OH secondaires,
c) de 0 à 5% en poids et de préférence de 0 à 3% en poids d'acide acrylique ou selon le cas d'acide méthacrylique ou des mélanges de ces monomères et
d) de 0 à 50% en poids et de préférence de 0 à 40% en poids de monomères éthyléniquement insaturés différents de a), b) et c) et qui peuvent former des copolymères avec a), b) et c), ou des mélanges de tels monomères.

**7.** Procédé ou peinture en plusieurs couches selon l'une quelconque des revendications 1 à 6, **caractérisé en ce que** le composant (A) contient

a) de 20 à 60% en poids d'un acrylate d'alkyle, d'un acrylate de cycloalkyle, d'un méthacrylate d'alkyle ou d'un méthacrylate de cycloalkyle qui comportent de 1 à 18 et de préférence de 4 à 13 atomes de carbone dans le radical alkyle ou-dans le radical cycloalkyle ou des mélanges de ces monomères,
b) de 20 à 41% en poids d'un mélange d'acrylates à fonctionnalités hydroxy ou de méthacrylates à fonctionnalités hydroxy qui présentent de 2 à 4 atomes de carbone dans le radical hydroxyalkyle, la quantité totale des acrylates à fonctionnalités hydroxy ou des métacrylates à fonctionnalités hydroxy étant composée de 25 à 50% en poids d'acrylates à fonctionnalités hydroxy ou de méthacrylates à fonctionnalités hydroxy qui présentent des groupes OH primaires et de 75 à 50% en poids d'acrylates à fonctionnalités hydroxy ou de méthacrylates à fonctionnalités hydroxy qui présentent des groupes OH secondaires,
c) de 0,5 à 2% en poids d'acide acrylique ou selon le cas d'acide méthacrylique ou des mélanges de ces monomères et
d) de 0 à 30% en poids de monomères éthyléniquement insaturés différents de a), b) et c) et qui peuvent former des copolymères avec a), b) et c) ou des mélanges de tels monomères.

**8.** Utilisation de la peinture en plusieurs couches selon l'une des revendications 2 à 7 pour recouvrir des carrosseries de voiture automobile.

**Revendications pour les Etats contractants suivants : Be, DE, ES, FR, GB, IT, PT, SE**

**1.** Procédé de réalisation d'une peinture en plusieurs couches, dans lequel

(1) une peinture de base le cas échéant pigmentée est appliquée sur la surface d'un support,
(2) un film de polymère est formé à partir de la couche de peinture de base appliquée lors de l'étape (1),
(3) une ou plusieurs autres couches de peinture sont le cas échéant appliquées sur celui-ci,
(4) une couche de recouvrement non aqueuse est ensuite appliquée et contient

A) une résine de polyacrylate à fonctionnalités hydroxy qui contient des groupes OH secondaires et qui présente un indice d'hydroxyle de 100 à 200 et
B) des agents de réticulation et,

(5) les couches de peinture sont ensuite cuites ensemble,

**caractérisé en ce que** l'agent de réticulation est la tris(alcoxycarbonylamino)triazine, une combinaison de tris (alcoxycarbonylamino)triazine et de résine aminoplastique ou une combinaison de tris(alcoxycarbonylamino)triazine, de résine aminoplastique et d'isocyanates bloqués autres que la tris(alcoxycarbonylamino)triazine.

**2.** Peinture en plusieurs couches qui contient

(1) une couche de film polymère d'une peinture de base le cas échéant pigmentée, qui est appliquée sur la surface d'un support,
(2) le cas échéant une ou plusieurs couches de peinture appliquées sur celui-ci,
(3) une couche de peinture de recouvrement non aqueuse qui contient

A) une résine de polyacrylate à fonctionnalités hydroxy qui contient des groupes OH secondaires et qui présente un indice d'hydroxyle de 100 à 200 et
B) des agents de réticulation, et

(4) les couches de peinture sont ensuite cuites ensemble,

**caractérisé en ce que** l'agent de réticulation est la tris(alcoxycarbonylamino)triazine, une combinaison de tris (alcoxycarbonylamino)triazine et de résine aminoplastique ou une combinaison de tris(alcoxycarbonylamino)triazine, de résine aminoplastique et d'isocyanates bloqués autres que la tris(alcoxycarbonylamino)triazine.

**3.** Procédé ou peinture en plusieurs couches selon l'une des revendications de 1 ou 2, **caractérisé en ce que** la peinture de recouvrement est transparente.

4. Procédé ou peinture en plusieurs couches selon l'une quelconque des revendications de 1 à 3, **caractérisé en ce que** la résine de polyacrylate présente un indice d'acide de 0 à 35 et de préférence de 0 à 23, une température de transition vitreuse de -35 et +70°C et de préférence de -20 à +40°C et un poids moléculaire moyen en nombre de 1 500 à 30 000 et de préférence de 2 000 à 15 000.

5. Procédé ou peinture en plusieurs couches selon l'une quelconque des revendications de 1 à 4, **caractérisé en ce que** la résine de polyacrylate présente un indice d'acide de 3,9 à 15,5, une température de transition vitreuse de -20 à +15 °C et un poids moléculaire moyen en nombre de 2 500 à 5 000.

6. Procédé ou peinture en plusieurs couches selon l'une quelconque des revendications de 1 à 5, **caractérisé en ce que** le composant (A) contient

a) de 1.0 à 92% en poids et de préférence de 20 à 70% en poids d'un acrylate d'alkyle, d'un acrylate de cycloalkyle, d'un méthacrylate d'alkyle ou d'un méthacrylate de cycloalkyle qui comportent de 1 à 18 et de préférence de 4 à 13 atomes de carbone dans le radical alkyle ou-dans le radical cycloalkyle ou des mélanges de ces monomères,
b) de 8 à 60% et de préférence de 12,5 à 51% en poids d'un mélange d'acrylates à fonctionnalités hydroxy ou de méthacrylates à fonctionnalités hydroxy qui présentent de 2 à 4 atomes de carbone dans le radical hydroxyalkyle, la quantité totale des acrylates à fonctionnalités hydroxy ou des métacrylates à fonctionnalités hydroxy étant composée de 10 à 90% en poids et de préférence de 20 à 80% en poids d'acrylates à fonctionnalités hydroxy ou de méthacrylates à fonctionnalités hydroxy qui présentent des groupes OH primaires et de 90 à 10% en poids et de préférence de 80 à 20% en poids d'acrylates à fonctionnalités hydroxy ou de méthacrylates à fonctionnalités hydroxy qui présentent des groupes OH secondaires,
c) de 0 à 5% en poids et de préférence de 0 à 3% en poids d'acide acrylique ou selon le cas d'acide méthacrylique ou des mélanges de ces monomères et
d) de 0 à 50% en poids et de préférence de 0 à 40% en poids de monomères éthyléniquement insaturés différents de a), b) et c) et qui peuvent former des copolymères avec a), b) et c), ou des mélanges de tels monomères.

7. Procédé ou peinture en plusieurs couches selon l'une quelconque des revendications 1 à 6, **caractérisé en ce que** le composant (A) contient

a) de 20 à 60% en poids d'un acrylate d'alkyle, d'un acrylate de cycloalkyle, d'un méthacrylate d'alkyle ou d'un méthacrylate de cycloalkyle qui comportent de 1 à 18 et de préférence de 4 à 13 atomes de carbone dans le radical alkyle au-dans le radical cycloalkyle ou des mélanges de ces monomères,
b) de 20 à 41% en poids d'un mélange d'acrylates à fonctionnalités hydroxy ou de méthacrylates à fonctionnalités hydroxy qui présentent de 2 à 4 atomes de carbone dans le radical hydroxyalkyle, la quantité totale des acrylates à fonctionnalités hydroxy ou des métacrylates à fonctionnalités hydroxy étant composée de 25 à 50% en poids d'acrylates à fonctionnalités hydroxy ou de méthacrylates à fonctionnalités hydroxy qui présentent des groupes OH primaires et de 75 à 50% en poids d'acrylates à fonctionnalités hydroxy ou de méthacrylates à fonctionnalités hydroxy qui présentent des groupes OH secondaires,
c) de 0,5 à 2% en poids d'acide acrylique ou selon le cas d'acide méthacrylique ou des mélanges de ces monomères et
d) de 0 à 30% en poids de monomères éthyléniquement insaturés différents de a), b) et c) et qui peuvent former des copolymères avec a), b) et c) ou des mélanges de tels monomères.

8. Utilisation de la peinture en plusieurs couches selon l'une des revendications 2 à 7 pour recouvrir des carrosseries de voiture automobile.